# EUROPEAN PATENT APPLICATION

(11) **EP 4 597 402 A1**
(43) Date of publication of application: **06.08.2025**
(21) Application number: 25155336.8
(22) Date of filing: 31.01.2025
(51) Int. Cl.: G06Q 30/02, G06F 40/186, G06Q 30/0251

(54) **METHOD, APPARATUS, DEVICE, AND MEDIUM FOR PAGE PRESENTATION**

(30) Priority: 01.02.2024 CN 202410145111
(71) Applicant: BEIJING YOUZHUJU NETWORK TECHNOLOGY CO. LTD., Beijing 101299 (CN)
(72) Inventor: JIA, Li, Beijing, 100028 (CN)
(74) Representative: Grünecker Patent- und Rechtsanwälte PartG mbB

(57) **Abstract**

According to embodiments of the disclosure, a method, an apparatus, a device, and a medium for page presentation are provided. The method includes: detecting a viewing request for a service details page of a target service from a client device; in response to detecting the viewing request, determining, based on a target category to which the target service belongs, a target page template corresponding to the target category; and causing the service details page of the target service to be presented at the client device based on the target page template and service information related to the target service, the service details page including the service information filled in the target page template.

## Description

### FIELD

Example embodiments of the present disclosure generally relate to the field of computer technologies, and in particular, to a method, an apparatus, a device, and a computer-readable storage medium for page presentation.

### BACKGROUND

The Internet provides access to a wide variety of resources. For example, various applications, products, audio and video content, and the like can be accessed via the Internet. In addition, content delivery and service promotion through the Internet have become a new form of information dissemination and are widely used. Advertising systems support displaying recommended content or services to users in different advertisement presentation opportunities, so that users can browse and acquire corresponding services as needed. In addition, from the recommended content presented in the advertisement presentation opportunity, it is also possible to jump to a detailed page corresponding to the recommended content or service to view more content or obtain other interactive entry.

### SUMMARY

In a first aspect of the present disclosure, there is provided a method for page presentation. The method includes: detecting a viewing request for a service details page of a target service from a client device; in response to detecting the viewing request, determining, based on a target category to which the target service belongs, a target page template corresponding to the target category; and causing the service details page of the target service to be presented at the client device based on the target page template and service information related to the target service, the service details page including the service information filled in the target page template.

In a second aspect of the present disclosure, there is provided an apparatus for page presentation. The apparatus includes: a viewing detecting module configured to detect a viewing request for a service details page of a target service from a client device; a template determining module configured to in response to detecting the viewing request, determine, based on a target category to which the target service belongs, a target page template corresponding to the target category; and a page presenting module configured to cause the service details page of the target service to be presented at the client device based on the target page template and service information related to the target service, the service details page including the service information filled in the target page template.

In a third aspect of the present disclosure, there is provided an electronic device. The device includes at least one processing unit; and at least one memory coupled to the at least one processing unit and storing instructions executable by the at least one processing unit, the instructions, when executed by the at least one processing unit, causing the device to perform the method of the first aspect.

In a fourth aspect of the present disclosure, there is provided a computer-readable storage medium. The medium has a computer program stored thereon, and the computer program, when executed by a processor, implements the method of the first aspect.

It should be understood that the content described in this section is not intended to limit key features or important features of the embodiments of the present disclosure, nor is it intended to limit the scope of the present disclosure. Other features of the present disclosure will become readily apparent from the following description.

### BRIEF DESCRIPTION OF THE DRAWINGS

The above and other features, advantages and aspects of the embodiments of the present disclosure will become more apparent when taken in conjunction with the drawings and with reference to the following detailed description. In the drawings, the same or similar reference numbers refer to the same or similar elements, where:
FIG. 1 illustrates a schematic diagram of an example environment in which embodiments of the present disclosure can be implemented;
FIG. 2 illustrates a flow chart of a signaling flow for page presentation according to some embodiments of the present disclosure;
FIG. 3 illustrates an example of a user interface with content delivery according to some embodiments of the present disclosure;
FIG. 4A illustrates an example of a page template of a service details page according to some embodiments of the present disclosure;
FIG. 4B illustrates an example of a service details page according to some embodiments of the present disclosure;
FIG. 4C illustrates an example structure of a page template according to some embodiments of the present disclosure;
FIG. 5 illustrates a flow chart of a method for page presentation according to some embodiments of the present disclosure;
FIG. 6 illustrates a block diagram of an apparatus for page presentation according to some embodiments of the present disclosure; and
FIG. 7 illustrates a block diagram of an electronic device in which one or more embodiments of the present disclosure can be implemented.

### DETAILED DESCRIPTION

Embodiments of the present disclosure will be described in more detail below with reference to the drawings. While certain embodiments of the present disclosure are shown in the drawings, it should be understood that the present disclosure may be implemented in various forms and should not be construed as limited to the embodiments set forth herein. Rather, these embodiments are provided for a thorough and complete understanding of the present disclosure. It should be understood that the drawings and embodiments of the present disclosure are only for illustrative purposes and are not intended to limit the scope of the present disclosure.

In the description of the embodiments of the present disclosure, the term "comprise/include" and similar terms should be understood as open-ended inclusion, that is, "comprise/include but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below.

It can be understood that the data involved in the technical solution (including but not limited to the data itself, the acquisition or use of the data) should comply with the requirements of corresponding laws, regulations and related provisions.

It can be understood that, before using the technical solutions disclosed in the embodiments of the present disclosure, users should be informed of the types, the scope of use, the use scenarios, etc., of personal information involved in the present disclosure, and the authorization of users should be obtained, in accordance with relevant laws and regulations, through appropriate means.

For example, in response to receiving an active request from the user, prompt information is sent to the user to explicitly prompt the user that the operation requested to be performed by him/her will require the acquisition and use of the user's personal information, so that the user can independently choose whether to provide the personal information to software or hardware such as an electronic device, an application, a server, or a storage medium that performs the operations of the technical solution of the present disclosure, according to the prompt information.

As an optional but non-limiting implementation, the manner of sending prompt information to the user in response to receiving the active request from the user may be, for example, in the form of a pop-up window, and the prompt information may be presented in text in the pop-up window. In addition, the pop-up window may also carry a selection control for the user to choose to "agree" or "disagree" to provide the personal information to the electronic device.

It can be understood that the above process of notifying and acquiring authorization of the user is only illustrative, and does not constitute a limitation on the implementations of the present disclosure, and other manners that meet relevant laws and regulations can also be applied to the implementations of the present disclosure.

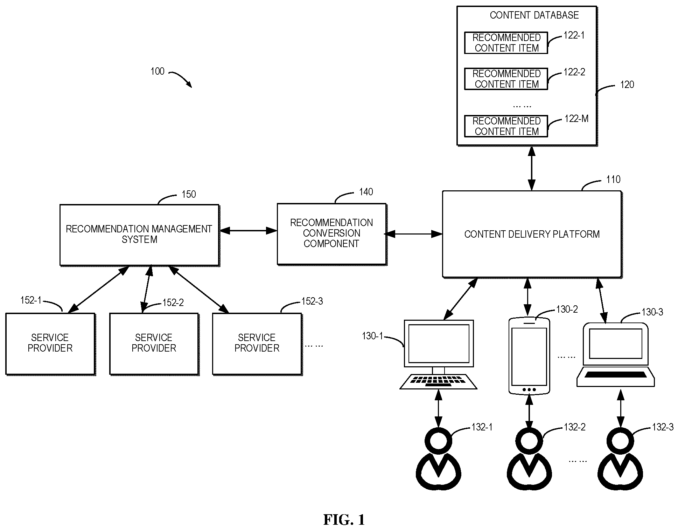

FIG. 1 illustrates a schematic diagram of an example environment 100 in which embodiments of the present disclosure can be implemented. One or more content providers can use the recommendation management system 150 to manage content to be delivered on the content delivery platform 110. One or more client devices 130-1, 130-2, 130-3, etc. (collectively or individually referred to as client devices 130 for ease of discussion) are associated with the content delivery platform 110, and can access various contents provided on the content delivery platform 110, for example, based on corresponding users 132-1, 132-2, 132-3, etc. (collectively or individually referred to as users 132 for ease of discussion). As an example, the content delivery platform 110 may be an application, a website, a webpage, and other accessible platforms. The client device 130 can be installed with an application for accessing the content delivery platform 110, or can access the content delivery platform 110 in a suitable way.

The content delivery platform 110 can be configured to deliver one or more specific recommended content items (for example, provided or presented on the client device 130) related to one or more services to a user group based on a corresponding strategy. The recommended content item to be delivered may include, for example, one or more recommended content items 122-1, 122-2,... 122-M (collectively or individually referred to as recommended content items 122 for ease of discussion) in the content database 120.

Herein, the services may include various recommendable objects, examples of which may include applications, physical products/services, virtual products/services, digital content/physical content, and the like. Herein, the "recommended content item" refers to content presented to recommend a corresponding service. An example of the recommended content item may include an advertisement. Herein, the user group may include one or more user members, such as users 132. The user members may be any potential consumers of the service, such as users, groups, organizations, entities, and so on.

In some embodiments, the content delivery platform 110 can distribute the corresponding recommended content items 122 to the users 130 based on requests from service providers 152-1, 152-2, 152-3, etc. (collectively or individually referred to as "service providers" 152). In the scenario of advertisement delivery, the service providers are sometimes also referred to as advertisers. In some embodiments, the recommended content item to be presented to a specific client device 130 in a content presentation opportunity (for example, at a specific time and a specific position) of the content delivery platform 110 can be selected based on a bidding result. For example, bids can be received from service providers, and a content presentation opportunity can be allocated to a highest bidder, which means that the corresponding recommended content item can be successfully delivered in a competitive delivery. The bid may refer to a cost to be spent on competing for delivering a certain recommended content item in a certain content presentation opportunity.

In some embodiments, the service provider may also pay the provider of the content delivery platform 110 based on the presentation of the recommended content item and subsequent conversion, etc. The recommendation conversion component 140 is configured to collect conversion results of the users 132 for the recommended content item. The conversion results for the recommended content item may include viewing, clicking, downloading, paying, adding to cart, etc. of the recommended content item, and specific conversion behaviors are related to the recommended service and the service provider.

In some embodiments, the recommended content item 122 may be related to a form capable of collecting information. Such a recommended content item is sometimes also referred to as a form advertisement. In this way, form information can be collected within the platform by presenting the form. The form advertisement can be used to invite users to subscribe to the service, provide a service estimate, answer follow-up service introductions, and receive information from the service provider, etc. The form submission, that is, the information collected through the form, can also be determined by the recommendation conversion component 140 as a conversion result of the recommended content item.

In the environment 100, the recommendation management system 150 can be configured to deliver a recommended content item related to a form. In some embodiments, the form information collected through the delivered form can be stored. The recommendation management system 150 can provide the collected form information to an information demander based on an information request from a service provider 152. In some embodiments, the service provider may also include a service provider who requests to deliver the recommended content item, or may be other information demanders.

In the environment 100, the client device 130 may be any type of mobile terminal, fixed terminal, or portable terminal, including a mobile phone, desktop computer, laptop computer, notebook computer, netbook computer, tablet computer, media computer, multimedia tablet, personal communication system (PCS) device, personal navigation device, personal digital assistant (PDA), audio/video player, digital camera/video camera, positioning device, TV receiver, radio broadcast receiver, E-book device, game device, or any combination thereof, including accessories and peripherals of these devices, or any combination thereof. In some embodiments, the client device 130 can also support any type of user-oriented interfaces (such as "wearable" circuits, etc.).

**In** the environment 100, the content delivery platform 110, the recommendation conversion component 140, and/or the recommendation management system 150 may be, for example, various types of computing systems/servers capable of providing computing power, including but not limited to mainframes, edge computing nodes, computing devices in cloud environments, and so on. Although shown separately, one or more of the content delivery platform 110, the recommendation conversion component 140, and/or the recommendation management system 150 may be combined.

**It** should be understood that the components and arrangements in the environment shown in FIG. 1 are only examples, and a computing system suitable for implementing the example embodiments described in the present disclosure may include one or more different components, other components and/or different arrangements.

When users browse content, including browsing recommended content items, they may request to view a service details page corresponding to the recommended service in order to obtain more information. Traditionally, service details pages include content defined independently by service providers in order to better present their respective service-related information. In this case, the service details page for each service needs to be designed as a whole in advance, and is rendered as a whole to the users when the users trigger the presentation. However, different service providers provide different categories of services, and the page designs of service providers in the same category are different, so that the service details pages may not always highlight the corresponding services well. This is not only not conducive for users to obtain information and make service decisions, but also makes it impossible to obtain a good visual experience. In addition, the previous design and rendering methods of the service details page also make it necessary to redesign the entire page in case of a service information change, which makes the entire page maintenance and update process complex and costly.

According to an embodiment of the present disclosure, an optimized page presentation solution is provided. According to this solution, for different categories of services, page templates are predefined based on the categories . When a viewing request for a service details page of a service is detected from a client device, the service details page of the service is rendered and presented based on a page template corresponding to a category to which the triggered service belongs, and service information. In this way, by configuring the page templates, the service details pages corresponding to different categories of services can be standardized and unified, which is beneficial for highlighting the characteristics of different services, so that users can obtain useful service-related information more quickly. In addition, for the service providers, only the basic service information needs to be provided, instead of designing the service details page as a whole, which reduces the cost of page design. On the other hand, the templated page is also easier to maintain and adapts to the update of service information more quickly.

Some example embodiments of the present disclosure will be described below with continued reference to the drawings.

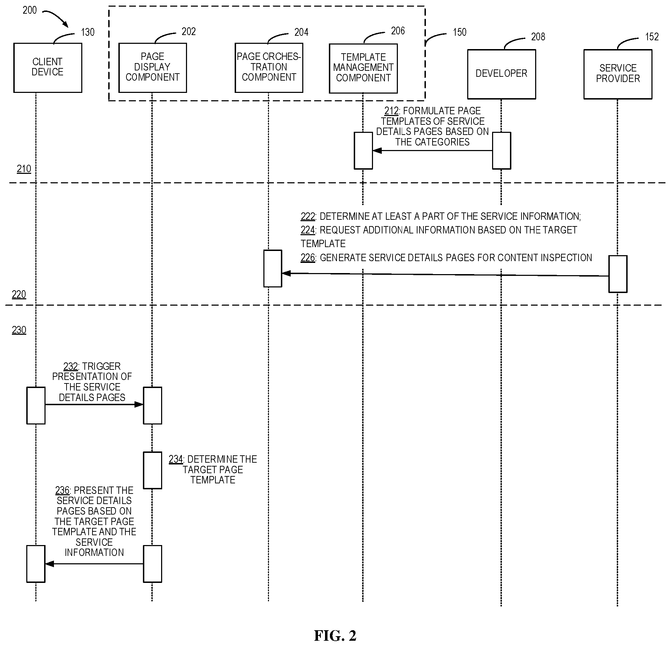

FIG. 2 illustrates a flow chart of a signaling flow 200 for page presentation according to some embodiments of the present disclosure. For ease of discussion, the signaling flow 200 is described with reference to FIG. 1. As shown in signaling flow 200, the signaling flow 200 involves a client device 130, a recommendation management system 150, a developer 208, and a service provider 152. Note that it is only for discussion to discuss in conjunction with the recommendation management system 150, but it should be understood that the embodiments of the present disclosure can be implemented in any suitable device or system.

The recommendation management system 150 may include a page display component 202, a page orchestration component 204, and a template management component 206. Note that here, it is only for the purpose of discussion to distinguish different components according to functions. Different components may be implemented in software, hardware, firmware, and any combination thereof. In practical applications, these components can also be divided in any other appropriate manner.

**In** a page presentation stage 230, the page display component 202 detects (232) a viewing request for a service details page of a target service from the client device 130. The service details page is used to present detailed information related to the target service, so that users can learn more about the target service and make further decisions. The service details page may also be referred to as a "landing page" or a jump page of a recommended content item delivered in a previous content presentation opportunity. The service details page can present more service information.

**In** some embodiments, a form for collecting predetermined form information may also be provided on the service details page. The design of the form may be determined based on the service provider or information demander of the target service. The form information may include various information provided by the user that is helpful for providing the target service to the user. The client device 130 receives a submission operation of the user 132 on the form, thereby obtaining the form information collected in the form. The client device 130 can submit the collected form information to the server-side. The server-side may include, for example, the conversion component 140 and the recommendation management system 150. On the server-side, the collected form information is at least used to determine the user's intention degree for the target service. In some embodiments, the form includes information input elements for receiving the form information.

**In** some embodiments, the client device 130 delivers the recommended content item in the content presentation opportunity, and the recommended content item is delivered to recommend the target service. In some embodiments, the client device 130 can determine, in response to an instruction from the content delivery platform 110, the content presentation opportunity in which the recommended content item is to be delivered, and present the recommended content item in the corresponding content presentation opportunity. The content presentation opportunity refers to a time and/or a position at which the recommended content item can be presented to the user. The content presentation opportunity may be determined according to the terminal device or the user. The content delivery platform 110 determines the content presentation opportunity and the recommended content item to be delivered in the content presentation opportunity, and instructs the client device 130 corresponding to the content presentation opportunity to present the recommended content item.

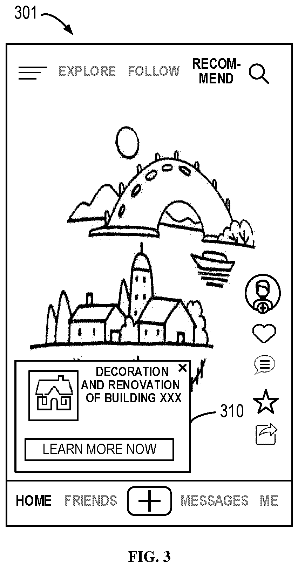

In some embodiments, the client device 130 may deliver the recommended content item in the content presentation opportunity of the feed page to increase the chance that the user can view the recommended content item. In some embodiments, the recommended content item includes at least summary service information related to the target service. By providing a service information exposure style in the recommended content item, the user's intention to convert to the target service can be improved. In some embodiments, the recommended content item may be designed as a card-type content item or an entry icon content item, so that the user is more willing to learn about the target service. FIG. 3 illustrates a user interface 301 presenting a recommended content item 310.

From the presented recommended content item, it is possible to jump to the service details page corresponding to the target service. Therefore, the page display component 202 may detect a trigger operation for the recommended content item from the client device 130. If the trigger operation is detected, the page display component 202 determines that the viewing request for the service details page of the target service is detected. For example, if the user clicks "Learn More Now" in the recommended content item 310 at the client device 130, the service details page can be adjusted to.

An example trigger manner for the service details page of the service is described above with reference to FIG. 3. However, it should be understood that the adjustment to the service details page can be triggered by any other appropriate means, for example, by directly clicking on the access link of the service details page, etc. The embodiments of the present disclosure do not limit this.

In response to detecting the viewing request from the client device 130 for the service details page of the target service, the page display component 202 determines (234) the target page template corresponding to the target category based on the target category to which the target service belongs. The page display component 202 causes (236) the service details page of the target service to be presented at the client device 130 based on the target page template and the service information related to the target service, the service details page including the service information filled in the target page template.

In the embodiment of the present disclosure, for different categories of services, page templates are predefined based on the categories. The categories here may be service divisions performed according to any appropriate criteria based on the characteristics of the provided services. For example, different categories may be divided according to the industry to which the service belongs, or the categories of the service may be divided in larger or smaller granularity. When a viewing request for a service details page of a service is detected from a client device, a page template corresponding to the service will be retrieved.

The target page template is used to define a structured page format for information related to the target category. In this way, for the target category, a page layout that can better highlight service features and help users understand the services in this category can be designed according to the characteristics of the services in this category. By configuring the page templates, the service details pages corresponding to different categories of services can be standardized and unified, which is beneficial for highlighting the characteristics of different services, so that users can obtain useful service-related information more quickly. In some embodiments, the target page template at least includes a definition of key-value pairs for the information related to the target category and key information in the key-value pairs. In this way, the service information corresponding to the target service will be filled as value information in the key-value pairs.

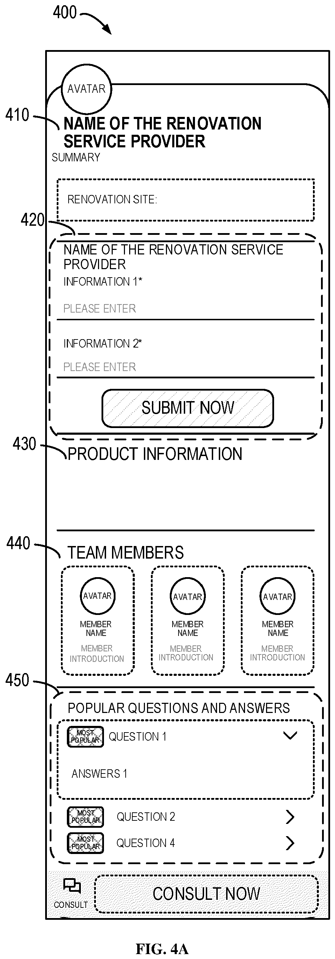

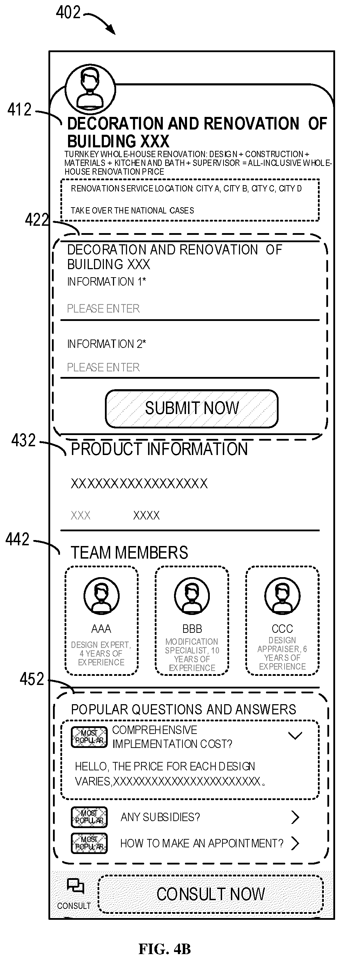

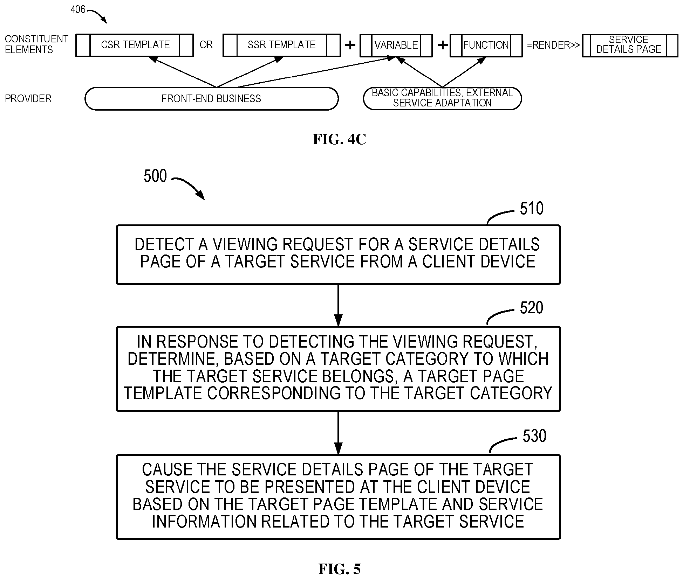

FIG. 4A illustrates an example of a page template 400 of a service details page according to some embodiments of the present disclosure. As shown in FIG. 4, the page template 400 defines a page template for a service details page of "renovation service", including a page layout, information required in different areas of the page (given in the form of key-value pairs), and so on. For example, area 410 will present basic information of the renovation service provider, including avatar, name, introduction, etc.; area 420 presents a form format for collecting form information; area 430 presents detailed product information; area 440 is used to present information of renovation team members; area 450 is used to present popular questions and answers under the service, etc. Of course, this is only an example, and it can be designed according to actual applications.

Based on the page template, the service-specific service details page can be generated and presented only by filling in the page template with the service information corresponding to each service. FIG. 4B illustrates a service details page 402 presented based on the page template of FIG. 4 according to some embodiments of the present disclosure, where each area is filled with the service information corresponding to the service provider of "decoration and renovation of building XXX ".

In some embodiments, the recommendation management system 150, such as the template management component 206 therein, may be configured to generate and maintain a plurality of page templates corresponding to a plurality of categories respectively, the plurality of categories including the target category. In some embodiments, in a page template generation stage 210, the developer 208 may formulate (212) page templates corresponding to service details pages of different types based on the categories.

The formulated page templates for each service are maintained by the template management component 206. When the page display component 202 detects the viewing request for the service details page of the target service, the target page template corresponding to the target category may be determined from the plurality of maintained categories based on the target category to which the target service belongs.

In some embodiments, after the page template generation stage 210, preliminary orchestration and management of the service details page may be performed by the page orchestration component 204. In some embodiments, after executing the service template based on the category, if a service provider 152 of a certain service, such as the service provider of the target service described above, expects to be able to deliver a recommended content item on the content delivery platform 110, and expects to jump from the recommended content item to the service details page corresponding to the target service, the service provider 152 may initiate a service recommendation request to the recommendation management system 150.

If the service recommendation request is received from the service provider of the target service, the page orchestration component 204 may determine, in response to the service recommendation request, the target category to which the target service belongs. Then, the page orchestration component 204 determines, based on the target category, the target page template corresponding to the target category from the maintained page templates. Then, the page orchestration component 204 may acquire, based on the target page template, the service information for filling in the target page template from the service provider 152.

In some embodiments, the service provider 152 may have previously provided historical information, which includes some or all of the service information required for the target page template. In this case, the page orchestration component 204 may determine (222) at least a part of the service information from the historical information provided by the service provider; and send an information acquisition request to the service provider to request (224) to acquire other parts of the service information (that is, request additional information). In some embodiments, the page orchestration component 204 may provide a list of required service information (or additional information) to the service provider 152. In some embodiments, the page orchestration component 204 may provide a preview of the service details page to the service provider 152, and indicate the additional information required in the preview.

According to the example embodiments of the present disclosure, for the service providers, only basic service information needs to be provided, instead of designing the service details page as a whole, which reduces the cost of page design. On the other hand, the templated page is also easier to maintain and adapts to the update of service information more quickly.

In some embodiments, after obtaining the service information of the target service and its target page template, the page orchestration component 204 may generate a preview of the service details page based on the service information and the target page template corresponding to the target category, and perform content inspection based on the preview of the service details page. After the content inspection is passed, the service details page of the target service may be provided to the client device when a viewing request from the client device is subsequently detected.

In some embodiments, in rendering the service details page based on the target page template and the service information, the page display component 202 may cause the service details page to be presented at the client device 130 through server-side rendering (SSR) or client-side rendering (CSR). In the case of server-side rendering, the page display component 202 renders the service details page based on the target page template and the service information, so that the service information is filled into a corresponding position of the target page template, and then the page display component 202 sends the rendered service details page to the client device 130 for presentation. In the case of client-side rendering, the page display component 202 may send page layout information, page filling information, etc. required for rendering the service details page to the client device 130, so that the client device 130 performs rendering.

FIG. 4C illustrates an example structure of a page template 406 according to some embodiments of the present disclosure. As shown in FIG. 4C, the page template 406 may include a CSR template or an SSR template. The CSR template is used to support client-side rendering, and the SSR template is used to support server-side rendering. The CSR template or SSR template belongs to a front-end business template of the recommendation management system. In addition, the page template 406 further defines variables, functions, etc. corresponding to the information to be presented in the service details page. The variables, functions, etc. belong to basic capabilities of the recommendation management system, and may be adapted to the services of the respective service providers. Based on the definition of the page template, in combination with the service information of the specific service, the service details page, for example, a hypertext markup language (HTML) page, may be rendered.

**In** some embodiments, if the service information of the target service changes, the changed service information may be maintained by the page orchestration component 204. When the viewing request for the service details page of the target service from a certain client device 130 is detected next time, the page display component 202 may cause the service details page of the target service to be presented at the client device 130 according to the presentation solution discussed in the above embodiments, but at this time, the changed service information may be provided in the service details page.

FIG. 5 illustrates a flow chart of a method 500 for page presentation according to some embodiments of the present disclosure. In some embodiments, the method 500 may be implemented in the recommendation management system 150. For the purpose of explanation, the method 500 will be described from the perspective of the recommendation management system 150 below.

At block 510, the recommendation management system 150 detects a viewing request for a service details page of a target service from a client device.

At block 520, the recommendation management system 150 determines, in response to detecting the viewing request, a target page template corresponding to the target category based on the target category to which the target service belongs.

At block 530, the recommendation management system 150 causes the service details page of the target service to be presented at the client device based on the target page template and the service information related to the target service, the service details page including the service information filled in the target page template.

In some embodiments, the service details page further includes a form for collecting predetermined form information.

**In** some embodiments, the target page template is used to define a structured page format for information related to the target category, and the target page template at least includes a definition of key-value pairs for the information related to the target category and key information in the key-value pairs.

In some embodiments, causing the service details page to be presented at the client device includes: causing the service details page to be presented at the client device through server-side rendering or client-side rendering.

In some embodiments, determining the target page template corresponding to the target category includes: maintaining a plurality of page templates corresponding to a plurality of categories respectively, the plurality of categories including the target category; and determining, from the plurality of categories, the target page template corresponding to the target category based on the target category to which the target service belongs.

In some embodiments, the method 500 further includes: receiving a service recommendation request from a service provider of the target service; and in response to the service recommendation request, acquiring, based on the target page template, the service information for filling in the target page template from the service provider.

In some embodiments, acquiring the service information for filling in the target page template includes: determining at least a part of the service information from historical information provided by the service provider; and sending an information acquisition request to the service provider to request to acquire other parts of the service information.

In some embodiments, the method 500 further includes: generating a preview of the service details page based on the service information and the target page template corresponding to the target category; and performing content inspection based on the preview of the service details page.

In some embodiments, detecting the viewing request for the service details page of the target service from the client device includes: detecting a trigger operation for a recommended content item from the client device, the recommended content item being delivered in a content presentation opportunity to recommend the target service; and in response to the trigger operation, determining the viewing request.

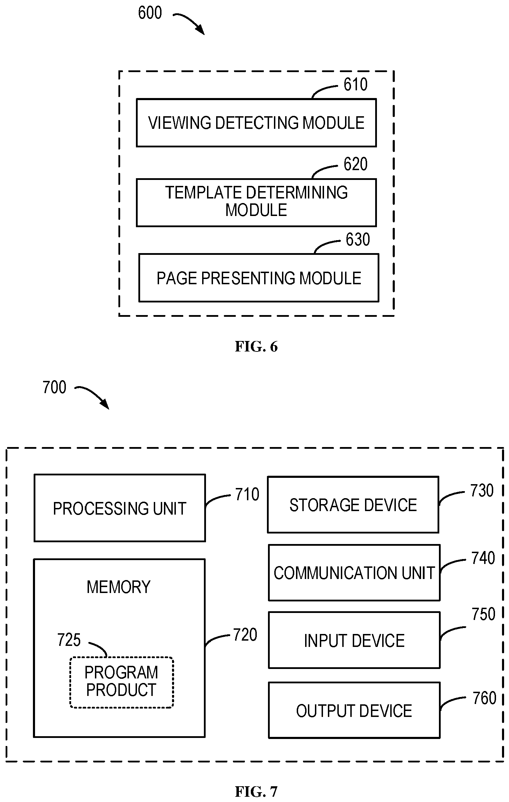

FIG. 6 illustrates a schematic structural block diagram of an apparatus 600 for page presentation according to some embodiments of the present disclosure. The apparatus 600 may be implemented as or included in the recommendation management system 150. The various modules/components in the apparatus 600 may be implemented in hardware, software, firmware, or any combination thereof.

As shown in the figure, the apparatus 600 includes a viewing detecting module 610 configured to detect a viewing request for a service details page of a target service from a client device. The apparatus 600 further includes a template determining module 620 configured to, in response to detecting the viewing request, determine, based on a target category to which the target service belongs, a target page template corresponding to the target category. The apparatus 600 further includes a page presenting module 630 configured to cause the service details page of the target service to be presented at the client device based on the target page template and service information related to the target service, the service details page including the service information filled in the target page template.

In some embodiments, the service details page further includes a form for collecting predetermined form information.

In some embodiments, the target page template is used to define a structured page format for information related to the target category, and the target page template at least includes a definition of key-value pairs for the information related to the target category and key information in the key-value pairs.

In some embodiments, the page presenting module 630 is configured to: cause the service details page to be presented at the client device through server-side rendering or client-side rendering.

In some embodiments, the template determining module 620 includes: a template maintaining module configured to maintain a plurality of page templates corresponding to a plurality of categories respectively, the plurality of categories including the target category; and a template selecting module configured to determine, from the plurality of categories, the target page template corresponding to the target category based on the target category to which the target service belongs.

In some embodiments, the apparatus 600 further includes: a recommendation request receiving module configured to receive a service recommendation request from a service provider of the target service; and an information acquiring module configured to, in response to the service recommendation request, acquire, based on the target page template, the service information for filling in the target page template from the service provider.

In some embodiments, the information acquiring module includes: a first acquiring module configured to determine at least a part of the service information from historical information provided by the service provider; and a second acquiring module configured to send an information acquisition request to the service provider to request to acquire other parts of the service information.

**In** some embodiments, the apparatus 600 further includes: a preview generating module configured to generate a preview of the service details page based on the service information and the target page template corresponding to the target category; and a content inspecting module configured to perform content inspection based on the preview of the service details page.

In some embodiments, detecting the viewing request for the service details page of the target service from the client device includes: detecting a trigger operation for a recommended content item from the client device, the recommended content item being delivered in a content presentation opportunity to recommend the target service; and in response to the trigger operation, determining the viewing request.

FIG. 7 illustrates a block diagram of an electronic device 700 in which one or more embodiments of the present disclosure can be implemented. It should be understood that the electronic device 700 shown in FIG. 7 is only an example, and should not constitute any limitation on the functions and scope of the embodiments described herein. The electronic device 700 shown in FIG. 7 can be used to implement the client device 130, or the content delivery platform 110, the recommendation conversion component 140 and/or the recommendation management system 150 (or the respective components therein). The electronic device 700 may include or be implemented as the apparatus 600 of FIG. 6.

As shown in FIG. 7, the electronic device 700 is in the form of a general-purpose computing device. The components of the electronic device 700 may include, but are not limited to, one or more processors or processing units 710, a memory 720, a storage device 730, one or more communication units 740, one or more input devices 750, and one or more output devices 760. The processing unit 710 may be a physical or virtual processor and can perform various processing according to programs stored in the memory 720. In a multi-processor system, multiple processing units execute computer-executable instructions in parallel to improve the parallel processing capability of the electronic device 700.

The electronic device 700 generally includes multiple computer storage medium. Such medium may be any available medium that can be accessed by the electronic device 700, including but not limited to volatile and non-volatile medium, removable and non-removable medium. The memory 720 may be a volatile memory (for example, register, cache, random access memory (RAM)), a non-volatile memory (for example, read-only memory (ROM), electrically erasable programmable read-only memory (EEPROM), flash memory), or some combination thereof. The storage device 730 may be a removable or non-removable medium, and may include a machine-readable medium, such as a flash drive, a disk, or any other medium, which may be capable of storing information and/or data (for example, training data for training) and may be accessed within the electronic device 700.

The electronic device 700 may further include additional removable/non-removable, volatile/non-volatile storage medium. Although not shown in FIG. 7, a disk drive for reading or writing from a removable, non-volatile disk (for example, "floppy disk") and an optical disk drive for reading or writing from a removable, non-volatile optical disk may be provided. In these cases, each drive may be connected to a bus (not shown) by one or more data medium interfaces. The memory 720 may include a computer program product 725, which has one or more program modules, and these program modules are configured to perform various methods or actions of various embodiments of the present disclosure.

The communication unit 740 implements communication with other electronic devices through communication media. Additionally, the functions of the components of the electronic device 700 can be implemented in a single computing cluster or multiple computing machines that can communicate through communication connections. Therefore, the electronic device 700 can operate in a networked environment using logical connections with one or more other servers, network personal computers (PCs), or another network node.

The input device 750 may be one or more input devices, such as a mouse, a keyboard, a trackball, or the like. The output device 760 may be one or more output devices, such as a display, a speaker, a printer, or the like. The electronic device 700 may also communicate with one or more external devices (not shown) through the communication unit 740 as required, the external devices such as storage devices, display devices, etc., communicate with one or more devices that enable the user to interact with the electronic device 700, or communicate with any device (for example, a network card, a modem, etc.) that enables the electronic device 700 to communicate with one or more other electronic devices. Such communication may be performed via an input/output (I/O) interface (not shown).

According to an example implementation of the present disclosure, a computer-readable storage medium having computer-executable instructions stored thereon is provided, where the computer-executable instructions are executed by a processor to implement the methods described above. According to an example implementation of the present disclosure, a computer program product is further provided, and the computer program product is tangibly stored on a non-transitory computer-readable medium and includes computer-executable instructions, and the computer-executable instructions are executed by a processor to implement the methods described above.

Various aspects of the present disclosure are described herein with reference to flowcharts and/or block diagrams of methods, apparatuses, devices, and computer program products implemented in accordance with the present disclosure. It should be understood that each block of the flowcharts and/or block diagrams, and also combinations of blocks in the flowcharts and/or block diagrams, can be implemented by computer-readable program instructions.

These computer-readable program instructions may be provided to a processing unit of a general-purpose computer, a special-purpose computer, or other programmable data processing apparatus to produce a machine, such that the instructions, when executed by the processing unit of the computer or other programmable data processing apparatus, produce an apparatus for implementing the functions/acts specified in one or more blocks of the flowcharts and/or block diagrams. These computer-readable program instructions may also be stored in a computer-readable storage medium, which instructions cause the computer, programmable data processing apparatus, and/or other device to work in a specific way, and thus, the computer-readable medium having instructions stored therein includes an article of manufacture including instructions for implementing various aspects of the functions/acts specified in one or more blocks of the flowcharts and/or block diagrams.

The computer-readable program instructions may be loaded onto a computer, other programmable data processing apparatus, or other device, causing a series of operational steps to be performed on the computer, other programmable data processing apparatus, or other device to produce a computer-implemented process, such that the instructions executed on the computer, other programmable data processing apparatus, or other device implement the functions/acts specified in one or more blocks of the flowcharts and/or block diagrams.

The flowcharts and block diagrams in the drawings show possible architectures, functions and operations of the system, method and computer program product implemented according to multiple implementations of the present disclosure. In this regard, each block in the flowcharts or block diagrams may represent a module, a program segment, or a portion of an instruction, and the module, program segment, or portion of an instruction includes one or more executable instructions for implementing the specified logical function. In some alternative implementations, the functions noted in the blocks may also occur out of the order noted in the drawings. For example, two consecutive blocks may, in fact, be executed substantially concurrently, or the blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or acts, or may be implemented by a combination of dedicated hardware and computer instructions.

Various implementations of the present disclosure have been described above, and the above description is illustrative and not exhaustive, and is not limited to the disclosed implementations. Many modifications and variations will be apparent to those skilled in the art without departing from the scope and spirit of the described implementations. The selection of terms used herein is intended to best explain the principles, the practical application, or the improvement of the technology in the market of the implementations, or to enable other ordinary skilled in the art to understand the various implementations disclosed herein.

## Claims

1. A method (500) for page presentation, comprising:
detecting (510) a viewing request for a service details page of a target service from a client device;
in response to detecting the viewing request, determining (520), based on a target category to which the target service belongs, a target page template corresponding to the target category; and
causing (530) the service details page of the target service to be presented at the client device based on the target page template and service information related to the target service, the service details page comprising the service information filled in the target page template.

2. The method according to claim 1, wherein the target page template is used to define a structured page format for information related to the target category, and the target page template at least comprises a definition of key-value pairs for the information related to the target category and key information in the key-value pairs.

3. The method according to claim 1, wherein causing (530) the service details page to be presented at the client device comprises:
causing the service details page to be presented at the client device through server-side rendering or client-side rendering.

4. The method according to claim 1, wherein determining (520) the target page template corresponding to the target category comprises:
maintaining a plurality of page templates corresponding to a plurality of categories respectively, the plurality of categories comprising the target category; and
determining, from the plurality of categories, the target page template corresponding to the target category based on the target category to which the target service belongs.

5. The method according to claim 1, further comprising:
receiving a service recommendation request from a service provider of the target service; and
in response to the service recommendation request, acquiring, based on the target page template, the service information for filling in the target page template from the service provider.

6. The method according to claim 5, wherein acquiring the service information for filling in the target page template comprises:
determining at least a part of the service information from historical information provided by the service provider; and
sending an information acquisition request to the service provider to request to acquire other parts of the service information.

7. The method according to claim 5, further comprising:
generating a preview of the service details page based on the service information and the target page template corresponding to the target category; and
performing content inspection based on the preview of the service details page.

8. The method according to claim 1, wherein detecting (510) the viewing request for the service details page of the target service from the client device comprises:
detecting a trigger operation for a recommended content item from the client device, the recommended content item being delivered in a content presentation opportunity to recommend the target service; and
in response to the trigger operation, determining the viewing request.

9. The method according to claim 1, wherein the service details page further comprises a form for collecting predetermined form information.

10. An apparatus (600) for page presentation, comprising:
a viewing detecting module (610) configured to detect a viewing request for a service details page of a target service from a client device;
a template determining module (620) configured to in response to detecting the viewing request, determine, based on a target category to which the target service belongs, a target page template corresponding to the target category; and
a page presenting module (630) configured to cause the service details page of the target service to be presented at the client device based on the target page template and service information related to the target service, the service details page comprising the service information filled in the target page template.

11. An electronic device (700), comprising:
at least one processing unit (710); and
at least one memory (720) coupled to the at least one processing unit (710) and storing instructions executable by the at least one processing unit (710), the instructions, when executed by the at least one processing unit (710), causing the device to perform the method according to any of claims 1 to 9.

12. A computer-readable storage medium having a computer program stored thereon, wherein the computer program, when executed by a processor, implements the method according to any of claims 1 to 9.
